# EUROPEAN PATENT APPLICATION

(11) **EP 4 717 898 A2**
(43) Date of publication of application: **01.04.2026**
(21) Application number: 25205406.9
(22) Date of filing: 29.09.2025
(51) Int. Cl.: F02C 7/06, F01D 25/20, F01D 25/34, F02C 7/32

(54) **SCAVENGE PUMP ASSEMBLY FOR AN AIRCRAFT ENGINE OIL SYSTEM**

(30) Priority: 27.09.2024 US 202418900145
(71) Applicant: PRATT & WHITNEY CANADA CORP., Longueuil, Québec J4G 1A1 (CA)
(72) Inventor: LABBE, Michel, (01BE5) Longueuil, J4G 1A1 (CA); GIGNAC, Stephane, (01BE5) Longueuil, J4G 1A1 (CA); BAKER-OSTIGUY, Simon, (01BE5) Longueuil, J4G 1A1 (CA)
(74) Representative: Dehns

(57) **Abstract**

An engine includes an engine rotational assembly and an engine oil system (34). The engine rotational assembly includes an engine shaft (50) and a rotor. The engine rotational assembly is rotatable about a first rotational axis (42). The engine oil system (34) includes a pump assembly (70) including a drive shaft (72), a pump (76), and a pump housing (74). The drive shaft (72) is coupled with the engine shaft (50). The drive shaft (72) extends along a second rotational axis (82) between and to a first shaft end (78) and a second shaft end (80). The drive shaft (72) includes a hand crank pad (86) at the second shaft end (80). The hand crank pad (86) includes a rotational drive member (88). The pump (76) includes a pump rotor (104) coupled with the drive shaft (72). The pump housing (74) extends along the second rotational axis (82) between a first housing end (90) and a second housing end (92). The second housing end (92) forms an opening (94) at the hand crank pad (86).

## Description

### TECHNICAL FIELD

This disclosure relates to engine oil systems for aircraft engines.

### BACKGROUND OF THE ART

Engines for aircraft may typically include rotational equipment configured for facilitating aircraft propulsion, generating electrical power, and/or other functions of aircraft operation. In many cases, rotational equipment may require lubrication and/or cooling, for example, using one or more oil systems to distribute oil to the rotational equipment and/or other oil loads. Various engine oil systems are known in the art. While these known systems may be useful for their intended purposes, there is always room in the art for improvement.

### SUMMARY

It should be understood that any or all of the features or embodiments described herein can be used or combined in any combination with each and every other feature or embodiment described herein unless expressly noted otherwise.

According to an aspect of the present disclosure, an engine for an aircraft propulsion system includes an engine rotational assembly and an engine oil system. The engine rotational assembly includes an engine shaft and a rotor. The rotor is coupled with the engine shaft. The engine rotational assembly is rotatable about a first rotational axis. The engine oil system includes a pump assembly forming a portion of an oil flow path through the engine oil system. The pump assembly includes a drive shaft, a pump, and a pump housing. The drive shaft is coupled with the engine shaft. The drive shaft extends along a second rotational axis between and to a first shaft end and a second shaft end. The drive shaft is rotatable about the second rotational axis. The drive shaft includes a hand crank pad at the second shaft end. The hand crank pad includes a rotational drive member. The pump includes a pump rotor coupled with the drive shaft. The pump housing extends along the second rotational axis between a first housing end and a second housing end. The second housing end forms an opening at the hand crank pad. The pump housing circumscribes and houses the drive shaft and the pump between the first housing end and the second housing end.

In any of the aspects or embodiments described above and herein, the first rotational axis may be different than the second rotational axis.

In any of the aspects or embodiments described above and herein, the engine may further include a gear train coupling the drive shaft with the engine shaft.

In any of the aspects or embodiments described above and herein, the gear train may include a gear box, the first housing end may be disposed at the gear box, and the first shaft end may be coupled with the gear train.

In any of the aspects or embodiments described above and herein, the engine may further include a propulsor coupled with the engine shaft by the gear train.

In any of the aspects or embodiments described above and herein, the engine may further include an engine oil load connected in fluid communication with the engine oil system along the oil flow path. The engine oil system may further include an oil tank, and the pump may be connected in fluid communication between the engine oil load and the oil tank.

In any of the aspects or embodiments described above and herein, the pump assembly may include a plurality of pumps, the plurality of pumps may include the pump, and each of the plurality of pumps may include a respective one of the pump rotor coupled with the drive shaft.

In any of the aspects or embodiments described above and herein, the pump housing may include a cover mountable on the pump housing over the opening.

According to another aspect of the present disclosure, an engine for an aircraft propulsion system includes a gear train and an engine oil system. The gear train includes a gear box. The engine oil system includes a pump assembly forming a portion of an oil flow path through the engine oil system. The pump assembly includes a drive shaft, a pump, and a pump housing. The drive shaft is coupled with the gear train. The drive shaft extends along a rotational axis between and to a first shaft end and a second shaft end. The drive shaft is rotatable about the rotational axis. The drive shaft is coupled with the gear train at the first shaft end. The drive shaft includes a hand crank pad at the second shaft end. The hand crank pad includes a rotational drive member. The pump includes a pump rotor coupled with the drive shaft. The pump housing extends along the rotational axis between a first housing end and a second housing end. The first housing end is mounted on the gear box. The second housing end forms an opening coincident with the hand crank pad along the rotational axis. The pump housing circumscribes and houses the drive shaft and the pump between the first housing end and the second housing end.

In any of the aspects or embodiments described above and herein, the engine may further include an engine oil load connected in fluid communication with the engine oil system along the oil flow path. The engine oil system may further include an oil tank, and the pump may be connected in fluid communication between the engine oil load and the oil tank.

In any of the aspects or embodiments described above and herein, the engine may further include a propulsor coupled with the gear train.

In any of the aspects or embodiments described above and herein, the pump assembly may include a plurality of pumps, the plurality of pumps may include the pump, and each of the plurality of pumps may include a respective one of the pump rotor coupled with the drive shaft.

In any of the aspects or embodiments described above and herein, the pump housing may include a cover mountable over the opening.

According to another aspect of the present disclosure, a method for manually rotating an engine rotational assembly of an engine of an aircraft propulsion system includes engaging a hand tool with a hand crank pad of a drive shaft of a pump assembly, the drive shaft coupled with the engine rotational assembly by a gear train, and manually rotating the engine rotational assembly about a first rotational axis by rotating the drive shaft about a second rotational axis, different than the first rotational axis, with the hand tool.

In any of the aspects or embodiments described above and herein, the drive shaft may extend along the second rotational axis between and to a first shaft end and a second shaft end, the first shaft end may be coupled with the gear train, and the hand crank pad may be disposed at the second shaft end.

In any of the aspects or embodiments described above and herein, the pump assembly may further include a pump housing extending along the second rotational axis between a first housing end and a second housing end, the second housing end may form an opening at the hand crank pad, and the pump housing may circumscribe and house the drive shaft between the first housing end and the second housing end.

In any of the aspects or embodiments described above and herein, the method may further include removing a cover mounted on the second housing end over the opening prior to engaging the hand tool with the hand crank pad.

In any of the aspects or embodiments described above and herein, the method may further include visually inspecting a first portion of the engine rotational assembly, performing the step of manually rotating the engine rotational assembly, and visually inspecting a second portion of the engine rotational assembly.

In any of the aspects or embodiments described above and herein, the first portion and the second portion may be portions of a bladed rotor of the engine rotational assembly.

In any of the aspects or embodiments described above and herein, the engine may include an engine oil system, the engine oil system may form an oil flow path, the engine oil system may include the pump assembly, and the pump assembly may form a portion of the oil flow path.

The present disclosure, and all its aspects, embodiments and advantages associated therewith will become more readily apparent in view of the detailed description provided below, including the accompanying drawings.

### DESCRIPTION OF THE DRAWINGS

FIG. 1 illustrates a perspective view of an aircraft including a propulsion system, in accordance with one or more embodiments of the present disclosure.
FIG. 2 schematically illustrates a cutaway, side view of an aircraft propulsion system including a gas turbine engine, in accordance with one or more embodiments of the present disclosure.
FIG. 3 schematically illustrates an engine oil system for an aircraft propulsion system, in accordance with one or more embodiments of the present disclosure.
FIG. 4 schematically illustrates a cutaway, side view of a scavenge pump assembly for the engine oil system, in accordance with one or more embodiments of the present disclosure.
FIG. 5 illustrates a perspective view of the scavenge pump assembly, in accordance with one or more embodiments of the present disclosure.

### DETAILED DESCRIPTION

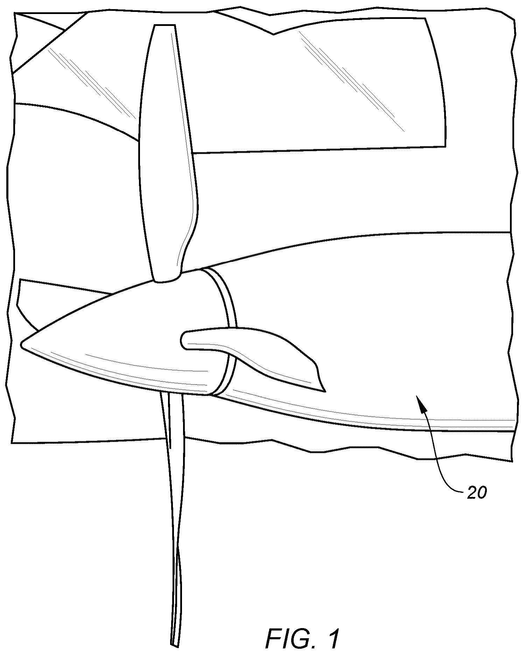

FIG. 1 illustrates a propulsion system 20 for an aircraft. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone).

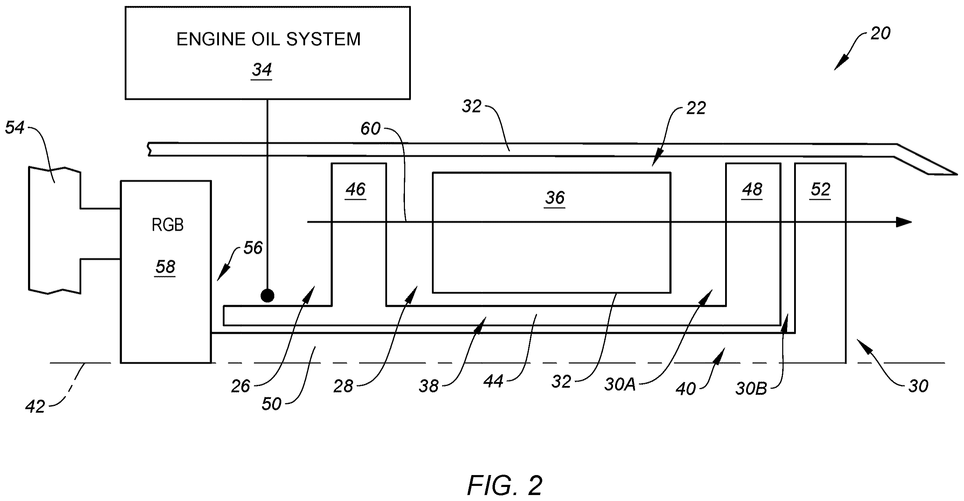

FIG. 2 schematically illustrates a cutaway, side view of the propulsion system 20. The propulsion system 20 of FIG. 2 includes a gas turbine engine 22. The gas turbine engine 22 of FIG. 2 is configured as a turboprop gas turbine engine. However, while the following description and accompanying drawings may refer to the turboprop gas turbine engine 22 of FIG. 2 as an example, it should be understood that aspects of the present disclosure may be equally applicable to other types of gas turbine engines including, but not limited to, a turboshaft gas turbine engine, a turbofan gas turbine engine, a turbojet gas turbine engine, a propfan gas turbine engine, or an open rotor gas turbine engine. Aspects of the present disclosure may be equally applicable to aircraft propulsion systems including other engine configurations such as, but not limited to, rotary engines, piston engines, and the like, or to electric aircraft propulsion systems (e.g., battery-electric propulsion systems, fuel-cell-electric propulsion systems, etc.). Aspects of the present disclosure may also be equally applicable to aircraft engines which are not part of a propulsion system, for example, an engine for an auxiliary power unit (APU).

The gas turbine engine 22 of FIG. 2 includes a compressor section 26, a combustor section 28, a turbine section 30, an engine static structure 32, and an engine oil system 34. The combustor section 28 includes a combustor 36 (e.g., an annular combustor). The turbine section 30 of FIG. 2 includes a high-pressure turbine (HPT) section 30A and a low-pressure turbine (LPT) section 30B.

Components of the compressor section 26 and/or the turbine section 30 form a first rotational assembly 38 (e.g., a high-pressure spool) and a second rotational assembly 40 of the gas turbine engine 22. The first rotational assembly 38 and the second rotational assembly 40 are mounted for rotation about a rotational axis 42 (e.g., an axial centerline) of the gas turbine engine 22 relative to the engine static structure 32.

The first rotational assembly 38 includes a first shaft 44, a bladed compressor rotor 46 for the compressor section 26, and a bladed first turbine rotor 48 for the high-pressure turbine section 30A. The first shaft 44 interconnects the bladed first compressor rotor 46 and the bladed first turbine rotor 48.

The second rotational assembly 40 includes a second shaft 50 and a bladed second turbine rotor 52 (e.g., a power turbine rotor) for the low-pressure turbine section 30B. The second shaft 50 is connected to the bladed second turbine rotor 52. The second shaft 50 couples the bladed second turbine rotor 52 with a propulsor 54 (e.g., a propeller) of the propulsion system 20. The second shaft 50 of FIG. 2 is coupled to the propulsor 54 by a gear train 56. For example, the gear train 56 of FIG. 2 includes a gear box 58 (e.g., a reduction gear box (RGB)) including a gear assembly (e.g., an epicyclic gear assembly) configured to drive the propulsor 54 at a reduced rotational speed relative to the second shaft 50. Alternatively, the second shaft 50 may be directed coupled to the propulsor 54 to drive the propulsor 54 at a same rotational speed as the second shaft 50.

The engine static structure 32 includes one or more engine cases, cowlings, inner fixed structures, and/or other non-rotating structures configured to house and/or support components of the gas turbine engine sections 26, 28, 30. The engine static structure 32 further includes one or more bearing assemblies configured to rotationally support components of the first rotational assembly 38 and the second rotational assembly 40.

In operation of the gas turbine engine 22, ambient air is directed into (e.g., from an air intake) and through the compressor section 26 along a core flow path 60. Air flow along the core flow path 60 is compressed in the compressor section 26, mixed and burned with fuel in the combustor 36, and the resultant combustion gas is directed through the high-pressure turbine section 30A and the low-pressure turbine section 30B. The bladed first turbine rotor 48 and the bladed second turbine rotor 52 rotationally drive the first rotational assembly 38 and the second rotational assembly 40, respectively, in response to the combustion gas flow through the high-pressure turbine section 30A and the low-pressure turbine section 30B. The second rotational assembly 40 drives rotation of the propulsor 54 to generate thrust for the propulsion system 20.

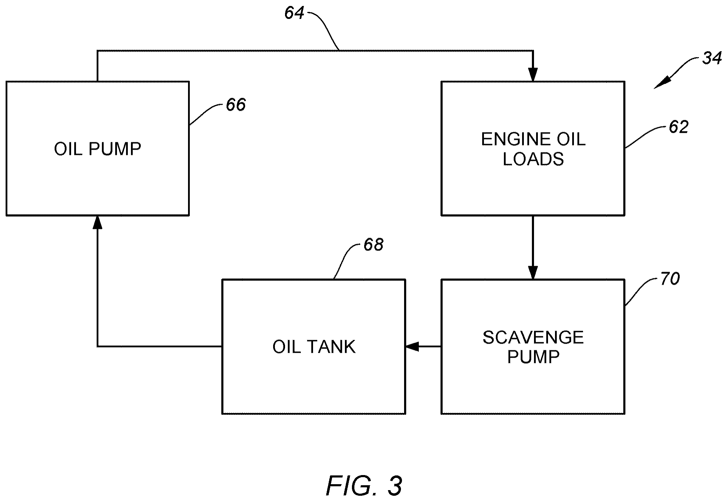

Referring to FIG. 3, the engine oil system 34 is configured to facilitate lubrication and/or cooling for components of the propulsion system 20 and its gas turbine engine 22. FIG. 3 schematically illustrates the engine oil system 34. The present disclosure is not limited to the foregoing exemplary configuration of the engine oil system 34 of FIG. 3, and the engine oil system 34 may include additional and/or alternative oil system components (e.g., tanks, valves, heat exchangers, pumps, conduits, regulators, etc.) suitable for facilitating lubrication and/or cooling for components of the propulsion system 20 and its gas turbine engine 22, referred to herein as engine oil loads 62. The engine oil loads 62 may include, but are not limited to, bearing assemblies, gear train 56 components (e.g., the gear box 58), shafts (e.g., the first shaft 44 and the second shaft 50), and the like.

The engine oil system 34 includes an oil flow path 64, an oil pump 66, an oil tank 68, and a scavenge pump assembly 70. The oil pump 66 is configured to circulate oil from the oil tank 68 along the oil flow path 64 to direct (e.g., pump) the oil to the engine oil loads 62 for lubrication and/or cooling of the engine oil loads 62. Oil from the engine oil loads 62 is directed to return to the oil tank 68 by the scavenge pump assembly 70. For example, the scavenge pump assembly 70 may operate to direct (e.g., pump) oil from one or more of the engine oil loads 62, or an oil sump downstream of the engine oil loads 62, to the oil tank 68.

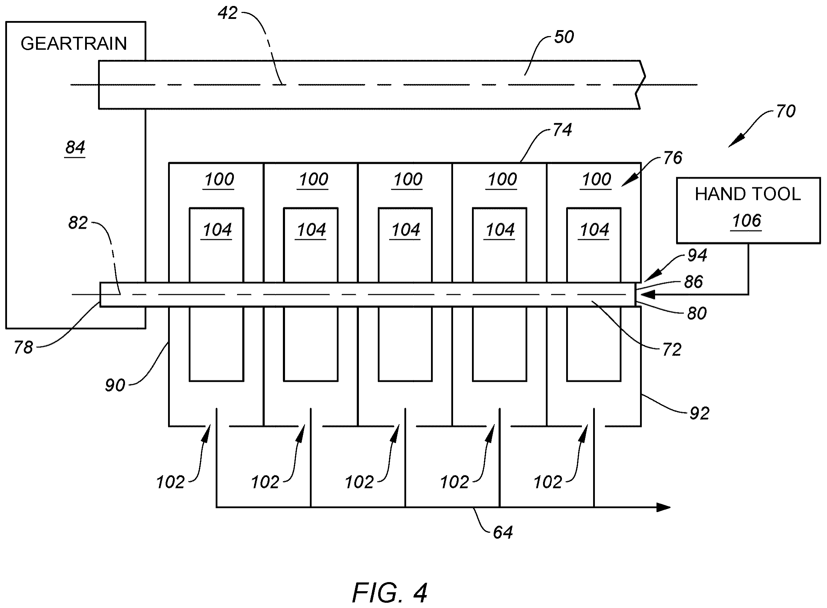

FIG. 4 schematically illustrates a cutaway, side view of the scavenge pump assembly 70. The scavenge pump assembly 70 includes a drive shaft 72, a pump housing 74, and a plurality of scavenge pumps 76.

The drive shaft 72 extends between and to a first axial end 78 of the drive shaft 72 and a second axial end 80 of the drive shaft 72 along an axis 82 (e.g., a rotational axis). The axis 82 is schematically illustrated in FIG. 4 parallel to the rotational axis 42, however, the present disclosure is not limited to any particular orientation of the axis 82 relative to the rotational axis 42. The drive shaft 72 is rotatable about the axis 82. The drive shaft 72 is coupled with an engine shaft of the gas turbine engine 22, such as the second shaft 50, as shown in FIG. 4. The drive shaft 72 of FIG. 4 is coupled with the second shaft 50 by a gear train 84. The gear train 84 may be part of the gear train 56. Alternatively, the gear train 84 may be a discrete gear train coupled with the second shaft 50 (or another engine shaft) independent of the gear train 56. For example, the drive shaft 72 is coupled with the gear train 84 at (e.g., on, adjacent, or proximate) the first axial end 78. The drive shaft 72 of FIG. 4 is configured to be rotationally driven about the axis 80 by the second shaft 50 through the gear train 84.

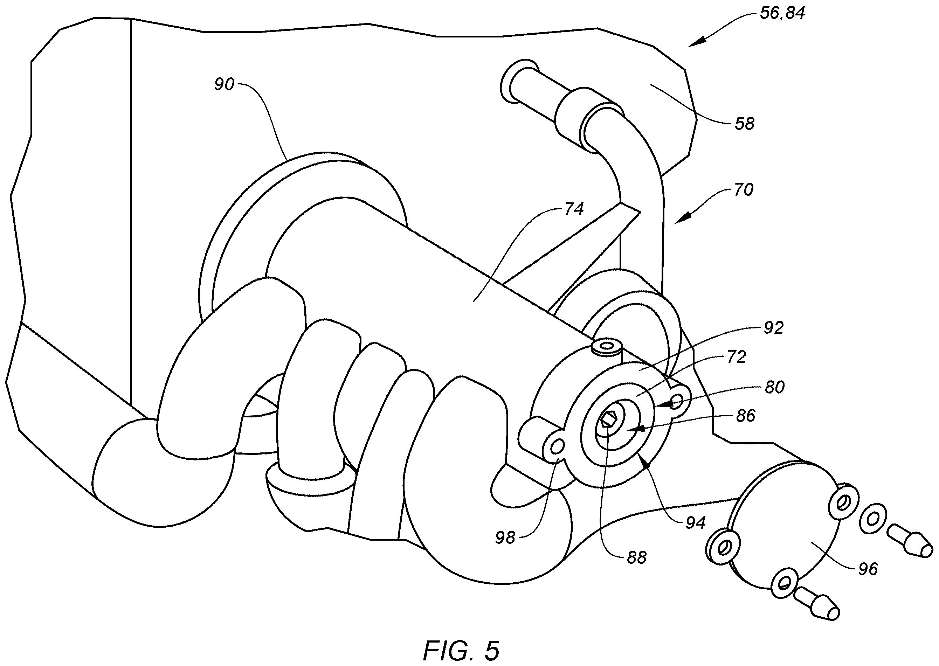

FIG. 5 illustrates a perspective view of an exemplary embodiment of the scavenge pump assembly 70 disposed at (e.g., on, adjacent, or proximate) the gear box 58. Referring to FIGS. 4 and 5, the drive shaft 72 includes a hand crank pad 86 on the second axial end 80. The hand crank pad 86 includes a drive member 88 configured for engagement with a tool 106 (e.g., a hand tool such as a wrench or other rotational driving tool) to facilitate manual rotation of the drive shaft 72 about the axis 82. The drive member 88 may form a female engagement interface (e.g., a socket) configured to receive and engage the tool 106. Alternatively, the drive member 88 may form a male engagement interface configured to engage the tool 106. The drive member 88 may form a hex drive interface, a square drive interface, or any other suitable rotational-driving interface configured for engagement with the tool 106.

The pump housing 74 extends between and to a first axial end 90 of the pump housing 74 and a second axial end 92 of the pump housing 74 along the axis 82. The first axial end 90 is mounted to or otherwise disposed at (e.g., on, adjacent, or proximate) the gear box 58. The second axial end 92 is disposed at (e.g., on, adjacent, or proximate) the second axial end 80. The pump housing 74 forms an opening 94 through the second axial end 92 coincident with the hand crank pad 86 (e.g., the drive member 88) along the axis 82. The pump housing 74 may include a cover 96. The cover 96 may be configured for attachment on the pump housing 74 to cover the opening 94 (e.g., during operation of the gas turbine engine 22). For example, the cover 96 may be selectively mountable on a mounting flange 98 of the pump housing 74 disposed about the opening 94 (e.g., by one or more mechanical fasteners).

The pump housing 74 houses the drive shaft 72 and each of the scavenge pumps 76. The pump housing 74 may facilitate rotational support of the drive shaft 72. The pump housing 74 forms a pump cavity 100 for each of the scavenge pumps 76. The pump cavity 100 of each of the scavenge pumps 76 is connected in fluid communication with the engine oil loads 62 (e.g., one engine oil load 62, a portion of one of the engine oil loads 62, etc.) along the oil flow path 64. The pump housing 74 forms a pump outlet 102 for each of the respective scavenge pumps 76 and pump cavities 100.

Each of the scavenge pumps 76 is driven by rotation of the drive shaft 72. For example, each of the scavenge pumps 76 may include a pump rotor 104 mounted on or otherwise coupled with the drive shaft 72 within a respective one of the pump cavities 100.

During operation of the gas turbine engine 22 and its engine oil system 34, the gas turbine engine 22 (e.g., the second shaft 50) drives rotation of the drive shaft 72 through the gear train 84 (e.g., the gear train 56 and its gear box 58). This rotation of the drive shaft 72 drives the scavenge pumps 76 (e.g., the pump rotors 104) to direct (e.g., pump) oil from the engine oil loads 62 back to the oil tank 68 along the oil flow path 64, for subsequent use by the engine oil system 34.

When the gas turbine engine 22 is shutdown, some maintenance and/or other operational procedures may require rotation of components of the gas turbine engine 22 such as, but not limited to, the second shaft 50, the gear train 56, the gear train 84, or other rotational components coupled therewith. For example, inspection of rotational equipment such as, but not limited to, a turbine rotor, a compressor rotor, a gear assembly, or the like (e.g., by visual observation, borescope inspection, etc.) may require periodic rotation of the rotational equipment to move portions of the rotational equipment into view for the inspector. The present disclosure facilitates manual rotation of components of the gas turbine engine 22 (e.g., the second shaft 50, the gear train 56, the gear train 84) by engaging the hand crank pad 86 (e.g., the drive member) with the tool 106 and rotating the interconnected components of the gas turbine engine 22 using the drive shaft 72 for the scavenge pump assembly 70. The location of the hand crank pad 86 at a distal end of the scavenge pump assembly 70 (e.g., the second axial ends 80, 92) facilitates improved ease of access compared to conventional practices which may require entry into an engine casing, a propulsion gear box, or another difficult-to-access location to manually rotate engine components, as well as preserving high-value space on and proximate core portions of the engine (e.g., an engine casing).

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims and should be understood as falling within the scope of the claims unless explicitly stated otherwise.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An engine for an aircraft propulsion system (20), the engine comprising:
an engine rotational assembly including an engine shaft (50) and a rotor, the rotor coupled with the engine shaft (50), the engine rotational assembly rotatable about a first rotational axis (42); and
an engine oil system (34) including a pump assembly (70) forming a portion of an oil flow path (64) through the engine oil system (34), the pump assembly (70) including a drive shaft (72), a pump (76), and a pump housing (74),
the drive shaft (72) coupled with the engine shaft (50), the drive shaft (72) extending along a second rotational axis (82) between and to a first shaft end (78) and a second shaft end (80), the drive shaft (72) rotatable about the second rotational axis (82), the drive shaft (72) including a hand crank pad (86) at the second shaft end (80), the hand crank pad (86) including a rotational drive member (88),
the pump (76) including a pump rotor (104) coupled with the drive shaft (72), and
the pump housing (74) extending along the second rotational axis (82) between a first housing end (90) and a second housing end (92), the second housing end (92) forming an opening (94) at the hand crank pad (86), the pump housing (74) circumscribing and housing the drive shaft (72) and the pump (76) between the first housing end (90) and the second housing end (92).

2. The engine of claim 1, wherein the first rotational axis (42) is different than the second rotational axis (82).

3. The engine of claim 1 or 2, further comprising a gear train (84) coupling the drive shaft (72) with the engine shaft (50).

4. The engine of claim 3, wherein the gear train (84) includes a gear box, the first housing end (90) is disposed at the gear box, and the first shaft end (78) is coupled with the gear train (84).

5. The engine of claim 3 or 4, further comprising a propulsor (54) coupled with the engine shaft (50) by the gear train (84).

6. The engine of any preceding claim, wherein the pump housing (74) includes a cover (96) mountable on the pump housing (74) over the opening (94).

7. An engine for an aircraft propulsion system (20), the engine comprising:
a gear train (84) including a gear box; and
an engine oil system (34) including a pump assembly (70) forming a portion of an oil flow path (64) through the engine oil system (34), the pump assembly (70) including a drive shaft (72), a pump (76), and a pump housing (74),
the drive shaft (72) coupled with the gear train (84), the drive shaft (72) extending along a rotational axis (82) between and to a first shaft end (78) and a second shaft end (80), the drive shaft (72) rotatable about the rotational axis (82), the drive shaft (72) coupled with the gear train (84) at the first shaft end (78), the drive shaft (72) including a hand crank pad (86) at the second shaft end (80), the hand crank pad (86) including a rotational drive member (88),
the pump (76) including a pump rotor (104) coupled with the drive shaft (72), and
the pump housing (74) extending along the rotational axis (82) between a first housing end (90) and a second housing end (92), the first housing end (90) mounted on the gear box, the second housing end (92) forming an opening (94) coincident with the hand crank pad (86) along the rotational axis (82), the pump housing (74) circumscribing and housing the drive shaft (72) and the pump (76) between the first housing end (90) and the second housing end (92),
wherein, optionally:
the engine further comprises a propulsor (54) coupled with the gear train (84); and/or
the pump housing (74) includes a cover (96) mountable over the opening (94).

8. The engine of any preceding claim, further comprising an engine oil load (62) connected in fluid communication with the engine oil system (34) along the oil flow path (64), wherein the engine oil system (34) further includes an oil tank (68), and the pump (76) is connected in fluid communication between the engine oil load (62) and the oil tank (68).

9. The engine of any preceding claim, wherein the pump assembly (70) includes a plurality of pumps (76), the plurality of pumps (76) includes the pump, and each of the plurality of pumps (76) includes a respective one of the pump rotor (104) coupled with the drive shaft (72).

10. A method for manually rotating an engine rotational assembly of an engine of an aircraft propulsion system (20), the method comprising:
engaging a hand tool (106) with a hand crank pad (86) of a drive shaft (72) of a pump assembly (70), the drive shaft (72) coupled with the engine rotational assembly by a gear train (84); and
manually rotating the engine rotational assembly about a first rotational axis (42) by rotating the drive shaft (72) about a second rotational axis (82), different than the first rotational axis (42), with the hand tool (106).

11. The method of claim 10, wherein the drive shaft (72) extends along the second rotational axis (82) between and to a first shaft end (78) and a second shaft end (80), the first shaft end (78) is coupled with the gear train (84), and the hand crank pad (86) is disposed at the second shaft end (80).

12. The method of claim 10 or 11, wherein the pump assembly (70) further includes a pump housing (74) extending along the second rotational axis (82) between a first housing end (90) and a second housing end (92), the second housing end (92) forms an opening (94) at the hand crank pad (86), and the pump housing (74) circumscribes and houses the drive shaft (72) between the first housing end (90) and the second housing end (92).

13. The method of claim 12, further comprising removing a cover (96) mounted on the second housing end (92) over the opening (94) prior to engaging the hand tool (106) with the hand crank pad (86).

14. The method of any of claims 10 to 13, further comprising visually inspecting a first portion of the engine rotational assembly, performing the step of manually rotating the engine rotational assembly, and visually inspecting a second portion of the engine rotational assembly,
wherein, optionally, the first portion and the second portion are portions of a bladed rotor of the engine rotational assembly.

15. The method of any of claims 10 to 14, wherein the engine includes an engine oil system (34), the engine oil system (34) forms an oil flow path (64), the engine oil system (34) includes the pump assembly (70), and the pump assembly (70) forms a portion of the oil flow path (64).
